# EUROPÄISCHE PATENTSCHRIFT

(11) **EP 3 193 276 B1**
(45) Veröffentlichungstag und Bekanntmachung des Hinweises auf die Patenterteilung: **06.06.2018**
(21) Anmeldenummer: 16151736.2
(22) Anmeldetag: 18.01.2016
(51) Int. Cl.: G06K 9/00, G06K 9/20

(54) **ERFASSUNGSVORRICHTUNG UND VERFAHREN ZUM ERKENNEN VON FAHRZEUGACHSEN**
DETECTION DEVICE AND METHOD FOR DETECTING VEHICLE AXLES
DISPOSITIF DE DETECTION ET PROCEDE DESTINE A LA RECONNAISSANCE D'ESSIEUX DE VEHICULE

(43) Veröffentlichungstag der Anmeldung: 19.07.2017
(73) Patentinhaber: SICK AG, 79183 Waldkirch (DE)
(72) Erfinder: Roscher, Sophie, 22359 Hamburg (DE); Odermatt, Dr. Stefan, 6343 Rotkreuz (CH)

(56) Entgegenhaltungen:
- US-A1- 2013 188 020
- US-A1- 2015 026 646
- US-B1- 6 404 920
- JIANG X ET AL: "Edge Detection in Range Images Based on Scan Line Approximation", COMPUTER VISION AND IMAGE UNDERSTANDING, ACADEMIC PRESS, US, Bd. 73, Nr. 2, 1. Februar 1999 (1999-02-01), Seiten 183-199, XP004444655, ISSN: 1077-3142, DOI: 10.1006/CVIU.1998.0715

## Beschreibung

Die Erfindung betrifft eine Erfassungsvorrichtung und ein Verfahren zum Erkennen von Fahrzeugachsen eines Fahrzeugs auf einer Fahrbahn nach dem Oberbegriff von Anspruch 1 beziehungsweise 10. Für die automatische Erfassung von Fahrzeugen gibt es verschiedene Anwendungen etwa zur Überprüfung von Fahrzeugregularien, Berechnung von Mautabgaben, Verkehrsleitung oder statistischer Verkehrsüberwachung. Es ist bekannt, die Fahrzeuge im fließenden Straßenverkehr an sogenannten Messbrücken zu erfassen, die beispielsweise optische Sensoren wie Laserscanner oder Kameras aufweisen, um die Fahrzeugkontur aufzunehmen. In einer entsprechenden Bildauswertung können anschließend Anzahl und Position der Fahrzeugachsen bestimmt werden.

Im Stand der Technik wird dafür versucht, die Räder der Fahrzeuge mit einem Bildauswertungsalgorithmus zu erkennen. Dabei kann die Farbinformation von Kamerabildern, aber auch das mit einer 3D-Kamera oder einem Laserscanner aufgenommene Fahrzeugprofil zugrunde gelegt sein. Dreidimensionale Bilddaten haben den Vorteil, dass sich die Bilddaten des Fahrzeugs sehr einfach von denjenigen des Hintergrundes, also in erster Linie der Fahrbahn, trennen lassen. Die bekannten visuellen Verfahren sind aber nicht besonders robust gegenüber schlechten Witterungsbedingungen. Da weiterhin die 3D-Verfahren in der Regel mit einer geringeren Auflösung arbeiten, sind sie besonders empfindlich gegenüber Schnee und Regen, weil die Schnee- und Spritzwasserdetektion die Messdaten erheblich verfälscht. Insgesamt ist also die Genauigkeit der Achsdetektion unbefriedigend.

Als Alternative zu einer visuellen Überwachung werden auch Induktionsschleifen in die Fahrbahn eingelassen oder darunter verlegt. Damit können die Achsen recht zuverlässig erfasst werden. Die Montage ist aber aufwändig. Gerade auf stark befahrenen Straßen unterliegen sie zudem hohen Abnutzungen. Einbau, Reparatur oder Austausch erfordern eine vorübergehende Stilllegung des Verkehrs und eine Widerherstellung der Fahrbahn nach den Arbeiten an den Sensoren.

Es ist daher Aufgabe der Erfindung, eine zuverlässige berührungslose Achsdetektion zu erreichen.

Diese Aufgabe wird durch eine Erfassungsvorrichtung und ein Verfahren zum Erkennen von Fahrzeugachsen eines Fahrzeugs auf einer Fahrbahn nach Anspruch 1 beziehungsweise 10 gelöst. Mit einem Profilerfassungssensor, auch als Tiefensensor bezeichnet, wird eine 3D-Punktwolke erzeugt, die Informationen über die Oberfläche des Fahrzeugs und der Fahrbahn im Bereich des Fahrzeugs enthält Die Achserkennung basiert auf einer Auswertung der 3D-Punktwolke. Im Gegensatz zu bisherigen Ansätzen, die direkt versuchen die Fahrzeugräder zu detektieren, geht die Erfindung nun von dem Grundgedanken aus, sogenannte Tiefenschatten auszuwerten. Das sind Bereiche in der 3D-Punktwolke, die aus Sicht des Profilerfassungssensors durch die Räder abgeschattet sind und die als Hinweis auf Fahrzeugachsen interpretiert werden. Die Erfindung nutzt also eine negative Information, nämlich die fehlende Tiefeninformation in der 3D-Punktwolke hinter den Rädern. Sicherheitshalber sei noch angemerkt, dass der Tiefenschatten nichts mit einem Schatten der Sonne oder einer Straßenbeleuchtung zu tun hat.

Die Erfindung hat den Vorteil, dass eine echtzeitfähige automatische Detektion auf Basis von 3D-Punktwolken ermöglicht ist, mit der Fahrzeugachsen zuverlässig erkannt und damit deren Position und Anzahl bestimmt werden kann. Wegen der berührungslosen Erkennung gibt es keine Abnutzungserscheinungen durch den Verkehr. Durch Montage der Erfassungsvorrichtung an einer Messbrücke über der Straße wird eine Verletzung der Fahrbahnoberfläche wie bei Induktionsschleifen vermieden. Dabei wird auf sehr robuste Weise eine hohe Erkennungsrate auch bei schlechten Witterungsbedingungen und hohen Geschwindigkeiten erzielt.

Für das Verständnis der Erfindung ist es hilfreich, ein Koordinatensystem zu definieren. In dieser Beschreibung ist ohne Beschränkung der Allgemeinheit die Fahrtrichtung oder die damit übereinstimmende Längsachse des Fahrzeugs die Z-Achse, die Höhe oder Achse senkrecht zur Fahrbahn die Y-Achse und die verbleibende Achse quer zum Fahrzeug und parallel zur Fahrbahn die X-Achse.

Die Auswertungseinheit ist bevorzugt dafür ausgebildet, Tiefenschattenbereiche als Fehlstellen in der 3D-Punktwolke im Bereich unter dem Fahrzeug zu erkennen. Tiefenschattenbereiche sind demnach Teilbereiche der 3D-Punktwolke, in denen Messpunkte wegen Abschattung durch die Räder fehlen. Die 3D-Punktwolke kann dabei ausdrücklich auch die Fahrbahn umfassen, die herkömmlich als Hintergrund ausgeblendet wird. Die Räder schatten die Fahrbahn ab und verursachen deshalb entsprechende Fehlstellen insbesondere auf der Fahrbahn.

Die Auswertungseinheit ist bevorzugt dafür ausgebildet, mit Hilfe einer Höhenschwelle einen Bodenbereich der 3D-Punktwolke zu selektieren. Die für die Lokalisierung von Tiefenschatten relevanten Messpunkte finden sich auf der Fahrbahn oder zumindest in Bodennähe.

Die Auswertungseinheit ist bevorzugt dafür ausgebildet, aus der 3D-Punktwolke die Tiefenschattenkontur als die jeweils größten Tiefenwerte in Schnittebenen quer zur Fahrzeuglängsachse, gemessen von einer Seite des Fahrzeugs, zu bestimmen. Die Tiefenschattenkontur ist insbesondere diejenige des Fahrzeugs auf der Fahrbahn. Diese Auswertung sucht pro senkrechter Schnittebene zur Fahrzeuglängsachse, also X-Y-Ebene, in der 3D-Punktwolke denjenigen Messpunkt, der von einer Fahrzeugseite den maximalen Abstand ins Fahrzeug hinein aufweist, also längs der X-Achse. Es entsteht eine Funktion des maximalen Tiefenwerts (in X-Richtung) in Abhängigkeit von der Position auf der Längsachse des Fahrzeugs (Z-Richtung). Da die 3D-Punktwolke diskret ist, gilt das auch für die Funktion, welche die Tiefenschattenkontur beschreibt.

Die Auswertungseinheit ist bevorzugt dafür ausgebildet, Punkte der 3D-Punktwolke in der Schnittebene zu ignorieren, die von der Seite des Fahrzeugs betrachtet hinter einer Lücke liegen. Die Lücke ist nichts anderes als der eigentliche Tiefenschatten, für den keine sinnvollen Messwerte vorliegen können. Wenn dort doch Messpunkte erkannt sind, dann werden sie als Rauscheffekt angesehen. Allerdings sollte die Lücke sicher erkannt sein, der Abstand zwischen den die Lücke begrenzenden Messpunkten also größer sein als eine Toleranzschwelle.

Die Auswertungseinheit ist bevorzugt dafür ausgebildet, Extrema in der Tiefenschattenkontur als Kandidaten für einen durch Räder abgeschatteten Tiefenschattenbereich zu erkennen. Vereinfachend wird ab jetzt davon ausgegangen, dass die Extrema Minima sind, denn ob Minima oder Maxima zu suchen sind, hängt einfach davon ab, aus welcher Richtung die Tiefenschattenkontur betrachtet wird. An den Positionen der Minima ist möglicherweise eine Fahrzeugachse erkannt. Ein solches Minimum kann auch ein Plateau sein und sollte es im Idealfall sogar, da ein Rad eine endliche Ausdehnung aufweist. Das Minimum kann auf übliche Weise durch Vorzeichenwechsel einer Funktionsableitung erkannt werden. Da die Tiefenschattenkontur eine diskrete Funktion ist, werden dazu vorzugsweise Differenzen von Nachbarpunkten der Tiefenschattenkontur gebildet.

Die Auswertungseinheit ist bevorzugt dafür ausgebildet, nur solche Minima zu berücksichtigen, bei denen der Anstieg neben dem Minimum steil genug ist. Ein Minimum soll also hinreichend ausgeprägt sein und sich so von Rauscheffekten unterscheiden. Eine einfache Erkennung basiert darauf, die für die Annäherung der Ableitung gebildeten Differenzen von Nachbarpunkten mit einer Mindestanstiegsschwelle zu vergleichen.

Die Auswertungseinheit ist bevorzugt dafür ausgebildet, die Kandidaten zu verifizieren und verifizierte Kandidaten als Fahrzeugachsen zu identifizieren, wobei mindestens eines der folgenden Kriterien erfüllt sein muss:
- die Breite des Minimums liegt in einem erwarteten Breitenintervall,
- die Tiefenschattenkontur ragt nicht zu weit unter das Fahrzeug und/oder
- die 3D-Punktwolke weist am Rand der Tiefenschattenkontur auf einer erwarteten Radhöhe eine Mindestanzahl von Punkten auf.

Nicht alle Minima entsprechen tatsächlich einer Fahrzeugachse, und sie sind genau deshalb nur als Kandidaten bezeichnet. Entspricht aber ein Kandidat mindestens einem der genannten Kriterien, so bleibt nur eine sehr kleine Fehlerrate, besonders wenn alle genannten Kriterien zugleich erfüllt sind.

Nach dem ersten Kriterium sollte bei dem Minimum ein hinreichend ausgeprägter Tiefenschattenbereich liegen, das Minimum also eine bestimmte Ausdehnung in Z-Richtung aufweisen. Das zulässige Breitenintervall ist vorzugsweise an einen typischen Raddurchmesser angepasst.

Das zweite Kriterium prüft, ob der Tiefenschatten eine Position einnimmt, in der eine Abschattung durch ein Rad plausibel ist. Beispielsweise wird eine Tiefenschattenposition als kleinster Tiefenwert in dem Minimum oder Durchschnittswert der Tiefenwerte in dem Minimum bestimmt. Dies wird dann mit einer Radposition verglichen. Die Radposition kann geschätzt werden, indem Messpunkte oberhalb des zu prüfenden Abschnitts der Tiefenschattenkontur gemittelt werden.

Nach dem dritten Kriterium wird festgestellt, ob die 3D-Punktwolke überhaupt etwas erfasst hat, was dem Rad entsprechen könnte, das den Tiefenschatten verursacht. Dazu können die gleichen Messpunkte herangezogen werden, die beim zweiten Kriterium für die beispielhafte Bestimmung der Radposition genutzt werden. Sie werden nun nicht gemittelt, sondern gezählt. Die geforderte Mindestanzahl ist vorzugsweise eine relative Größe. Sie wird also für alle Kandidaten oder Minima bestimmt, und dann werden diejenigen Kandidaten verworfen, bei denen diese Mindestanzahl besonders klein ist, beispielsweise wesentlich unterhalb des Durchschnitts liegt.

Vorzugsweise ist mindestens ein Profilerfassungssensor seitlich der Fahrbahn angeordnet, um eine Schnittebene quer zur Fahrzeuglängsachse zu erfassen. Ein derartig angeordneter Profilerfassungssensor erfasst im Laufe der Fahrzeugbewegung scheibenweise die 3D-Punktwolke des Fahrzeugs. Dabei kann der Sichtbereich auch größer sein, beispielsweise ein Raumbereich, der die genannte Ebene enthält. Die seitliche Perspektive ist besonders geeignet, damit die Räder ausgeprägte Tiefenschatten verursachen.

Vorzugsweise ist der Profilerfassungssensor in etwa auf einer Höhe von 1m bis 3m angeordnet. Dadurch wird eine besonders hohe Erkennungsrate erzielt. Der Profilerfassungssensor kann auch höher positioniert werden, solange dadurch die Sicht auf den Achsbereich erhalten bleibt. Bei einer solchen Montageposition kann jedoch die Erkennungsrate signifikant einbrechen.

Vorzugsweise sind zwei Profilerfassungssensoren seitlich zu beiden Seiten der Fahrbahn angeordnet. Dadurch werden zusätzliche Messpunkte erfasst. Die 3D-Punktwolke ist vollständiger und ermöglicht eine noch bessere Achserkennung beispielsweise durch Plausibilisierung der detektierten Achsen auf beiden Seiten.

Die Auswertungseinheit ist bevorzugt dafür ausgebildet, Tiefenschattenbereiche je einmal von beiden Seiten des Fahrzeugs her zu lokalisieren und die dabei jeweils identifizierten Fahrzeugachsen gegenseitig zu kombinieren oder zu plausibilisieren. Dieses Vorgehen ist besonders vorteilhaft im Zusammenhang mit zwei seitlich montierten Profilerfassungssensoren. Die Fahrzeugachsen werden nahezu unabhängig zweifach detektiert, und durch Vergleich oder Kombination wird die Erkennungsrate weiter verbessert.

Die Erfassungsvorrichtung weist bevorzugt mindestens einen Sensor auf, um Zeit-Positions-Informationen der Fahrzeuge zu erfassen. Bei dem Sensor handelt es sich beispielsweise um einen Profilerfassungssensor oder einen Radarsensor, und es kann einer der vorhandenen Profilerfassungssensoren beziehungsweise darin integriert oder ein eigener Zusatzsensor sein. In der Regel kann der Profilerfassungssensor nicht das gesamte Fahrzeug auf einmal, sondern beispielsweise nur Profilscheiben erfassen. Daher werden vorzugsweise die Einzelerfassungen des Profilsensors unter Zuhilfenahme der Zeit-Positions-Informationen zu der 3D-Punktwolke zusammengesetzt. Die Zeit-Positions-Informationen werden beispielsweise von oben mit einer Komponente in Fahrzeuglängsrichtung erfasst. Alternativ oder zusätzlich zur Zusammensetzung von Profilscheiben durch Zeit-Positions-Informationen ist auch ein Stitching-Verfahren denkbar.

Der mindestens eine Profilerfassungssensor weist bevorzugt eine 3D-Kamera oder einen Laserscanner auf. Eine 3D-Kamera kann beispielsweise einen Bildsensor mit Lichtlaufzeitmessung für ihre Pixel umfassen, oder es wird eine Laserlinie mit einem Lichtschnittverfahren ausgewertet. Ein Laserscanner erfasst zweidimensional eine Ebene in Polarkoordinaten, indem ein Abtaststrahl rotiert und dabei die Winkelposition sowie mit einem Puls- oder Phasenverfahren auch der Abstand bestimmt wird. Ein Laserscanner schafft auch bei ungünstigen Witterungsbedingungen wie Nebel eine robuste Detektion. Das gilt umso mehr, wenn es ein Outdoor-fähiger Laserscanner ist, der Störechos durch Regen, Schnee oder Nebel von einem eigentlichen Messecho an der Fahrzeugoberfläche oder Fahrbahn unterscheiden kann.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer Erfassungsvorrichtung in Form einer Messbrücke an einer Fahrbahn;
- Fig. 2: eine beispielhafte 3D-Punktwolke eines Fahrzeugs und einer Fahrbahn;
- Fig. 3: eine beispielhafte 3D-Punktwolke gemäß Figur 2 jedoch nur des Bodenbereichs erfasst von einem seitlichen Profilerfassungssensor;
- Fig. 4: ein Ausschnitt einer beispielhaften 3D-Punktwolke im Bodenbereich aus Perspektive von oben;
- Fig. 5: eine aus der 3D-Punktwolke gemäß Figur 4 gewonnene Tiefenschattenkontur;
- Fig. 6: ein weiteres Beispiel einer Tiefenschattenkontur zur Erläuterung des Auffindens von Minima als Kandidaten für erkannte Fahrzeugachsen;
- Fig. 7: eine Darstellung einer 3D-Punktwolke zur Erläuterung eines ersten Plausibilitätskriteriums durch Prüfen der Breite;
- Fig. 8: eine Darstellung einer 3D-Punktwolke zur Erläuterung eines zweiten Plausibilitätskriteriums durch Prüfen der Lage des Tiefenschattens; und
- Fig. 9: eine Darstellung einer 3D-Punktwolke zur Erläuterung eines dritten Plausibilitätskriteriums durch Prüfen der Messpunkte, die den Tiefenschatten verursachen.

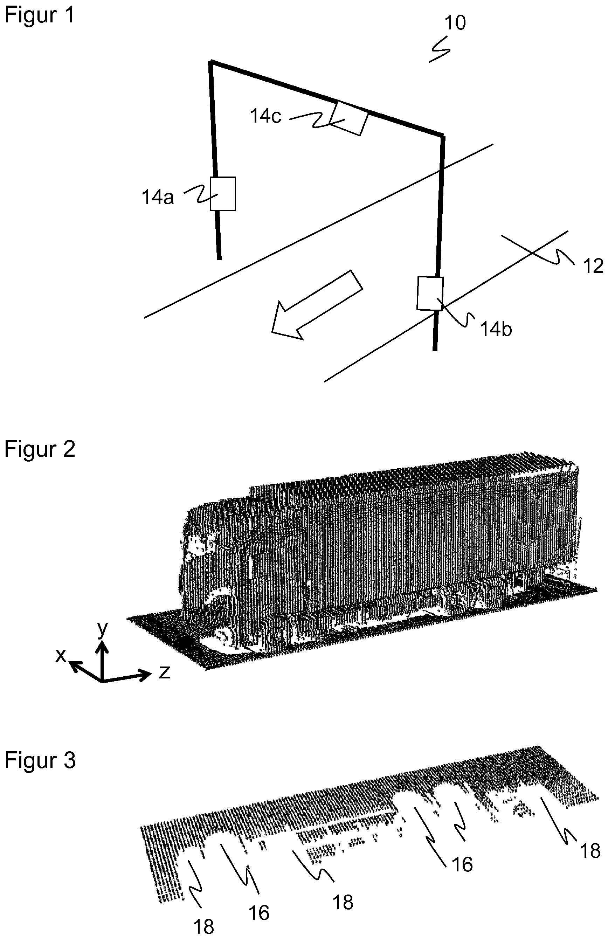

Figur 1 zeigt eine schematische dreidimensionale Darstellung einer Erfassungsvorrichtung 10, die hier in Form einer Messbrücke über einer Fahrbahn 12 montiert ist. Auf der Fahrbahn 12 bewegen sich nicht dargestellte Fahrzeuge beispielsweise in einer durch den Pfeil bezeichneten Fahrtrichtung unter der Messbrücke hindurch.

Die Erfassungsvorrichtung 10 umfasst mindestens einen Profilerfassungssensor 14a-c. Dargestellt sind zwei seitlich montierte Profilerfassungssensoren 14a-b sowie ein oberhalb der Fahrbahn 12 montierter Profilerfassungssensor 14c. Die Profilerfassungssensoren 14a-c sind Laserscanner oder 3D-Kameras, die in der Lage sind, Entfernungen zu Objekten oder Objektabschnitten innerhalb eines Erfassungsbereichs zu messen. Dadurch entsteht eine Vielzahl von Messpunkten, die auch als Punktwolke bezeichnet wird. Mindestens einer der Profilerfassungssensoren 14a-c fungiert als oder beinhaltet einen Drittsensor zur vorrangigen Bestimmung von Zeit-Positions-Informationen. Der Drittsensor ist ein Laserscanner, eine 3D Kamera oder ein Radargerät.

Die Erfassungsebene der beiden seitlich montierten Profilerfassungssensoren 14a-b liegt senkrecht zur Fahrtrichtung. Es wird dadurch in einer festen Fahrzeugposition ein Querprofil oder eine Scheibe des Fahrzeugs quer zu dessen Längsachse erfasst. Der oberhalb montierte Profilerfassungssensor 14c dient in diesem Ausführungsbeispiel vorrangig zur Bestimmung von Zeit-Positions-Informationen, um anschließend mittels Stitching-Prozess die im Laufe der Fahrzeugbewegung nacheinander erfassten Querprofile der beiden seitlich montierten Profilerfassungssensoren 14a-b korrekt aneinanderzureihen. Dazu wird beispielsweise eine Längskomponente des Fahrzeugs erfasst und daraus eine Geschwindigkeit abgeleitet.

Die auf diese Weise zusammengefügten Messpunkte der Profilerfassungssensoren 14a-c ergeben eine 3D-Punktwolke von Fahrzeug und Fahrbahn. Figur 2 zeigt ein Beispiel. Auf das dort ebenfalls eingezeichnete Koordinatensystem wird im Folgenden häufiger Bezug genommen. Es ist nicht zwingend erforderlich, die Messpunkte mehrerer Profilerfassungssensoren 14a-c miteinander zu kombinieren.

Für das Zusammenführen von Messpunkten sowie die im Anschluss beschriebene Auswertung der entstehenden 3D-Punktwolke zur Achsdetektion sind die mehreren Profilerfassungssensoren 14a-c mit einer nicht dargestellten Steuer- und Auswertungseinheit verbunden. Mit deren Hilfe kann auch eine gegenseitige Registrierung erfolgen, anhand derer die Messpunkte in ein gemeinsames Koordinatensystem umgerechnet werden.

Im Gegensatz zu existierenden Auswertungsverfahren mit direkter Raderkennung in der 3D-Punktwolke durch Clustering von Messpunkten berücksichtigt die erfindungsgemäße Auswertung eine Art negative Information, nämlich die Tatsache, dass wegen Abschattungseffekten hinter einem Rad keine Messpunkte vorhanden sein können. Dies wird als Tiefenschatten bezeichnet. Der Tiefenschatten zeigt sich besonders zuverlässig auf der Fahrbahn 12, die deshalb anders als bei herkömmlichem Vorgehen vorzugsweise nicht vom Fahrzeug separiert, sondern in die auszuwertende 3D-Punktwolke einbezogen wird.

Als erster Schritt zur Lokalisierung der Tiefenschatten und damit der Fahrzeugachsen wird vorzugsweise die 3D-Punktwolke auf Punkte in Bodennähe reduziert. Dazu können die Messpunkte mit einer Höhenschwelle verglichen werden. Es werden nur Messpunkte beibehalten, die einer kleineren Höhe entsprechen als die Höhenschwelle. In dem Koordinatensystem der Figur 2 wird dazu die Y-Richtung betrachtet.

Figur 3 zeigt ein Beispiel einer dadurch entstehenden 3D-Punktwolke in Bodennähe. Dabei sind nur Messpunkte eines, also des rechten oder linken, seitlichen Profilerfassungssensors 14a-b verwendet. Das Verfahren kann parallel mit den Messpunkten des anderen Profilerfassungssensors 14b-a durchgeführt oder anschließend wiederholt werden, um dann die erkannten Achsen zu vergleichen oder zu kombinieren. Mit bloßem Auge sind die Tiefenschattenbereiche 16 der drei Fahrzeugachsen deutlich zu erkennen. Die nicht von Rädern verursachten Tiefenschatten 18 werden abschließend durch Plausibilitätskriterien ausgeschlossen.

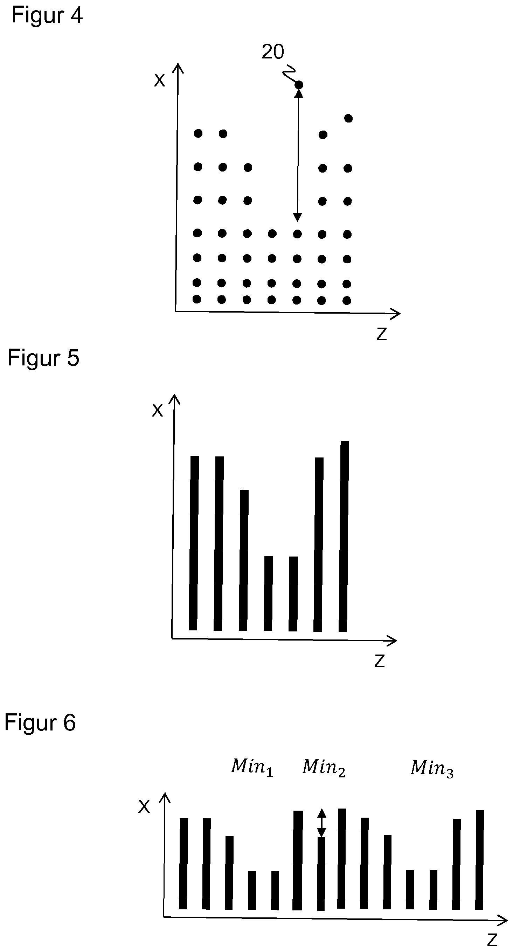

Figur 4 zeigt einen schematischen Ausschnitt einer 3D-Punktwolke in Bodennähe von oben betrachtet. Jede vertikale Reihe entspricht einem Querscanprofil, das in Bodennähe abgeschnitten ist. Als weiterer Auswertungsschritt wird nun hieraus die Tiefenschattenkontur bestimmt. Sie umfasst die jeweils größten Tiefenwerte der Querscanprofile, demnach also für jede Position auf der Z-Achse längs des Fahrzeugs den maximalen X-Wert quer zum Fahrzeug. Nicht berücksichtigt werden Messpunkte hinter einer zu großen Lücke. In Figur 4 betrifft das den Messpunkt 20, der wie durch den Pfeil angezeigt einen zu großen Abstand von seinen Nachbarn aufweist. Auch etwaige weitere Messpunkte oberhalb des Messpunktes 20 würden ignoriert. Eine Lücke mit Mindestausmaßen, wie durch den Pfeil bezeichnet, wird als der eigentliche Tiefenschatten angesehen. Dahinter kann es dann wegen der Abschattung keine sinnvollen Messpunkte mehr geben, und die Berücksichtigung des Messpunktes 20 würde nur einem Rauscheffekt Gewicht geben.

Das Ergebnis ist die in Figur 5 gezeigte diskrete Tiefenschattenkontur. Anders ausgedrückt enthält dieses Diagramm den Abstand zum jeweils letzten Messpunkt vor dem Tiefenschatten. Das Auge löst die Tiefenschattenkontur in Figur 3 als Rand der schwarzen Punktwolke problemlos auf und ignoriert dabei die isolierten inneren Messpunkte, die durch Bereiche ohne Messpunkte abgetrennt sind. Das beschriebene Auffinden des Diagramms gemäß Figur 5 aus Messpunkten wie in Figur 4 ist letztlich die entsprechende algorithmische Lösung.

Die aufzufindenden Tiefenschattenbereiche 16 in Figur 3 sind (lokale) Extrema der Tiefenschattenkontur und können als solche lokalisiert werden. In den Konventionen der Figur 5 werden daraus Minima. Figur 6 zeigt einen etwas größeren Abschnitt einer diskreten Tiefenschattenkontur und drei darin markierte Minima. Dabei ist nicht unbedingt nur der minimale Wert von Interesse, sondern auch ein umgebendes Plateau, das auch aus nur ähnlichen und nicht gleichen Werten bestehen kann. Allerdings sollte das Minimum hinreichend ausgeprägt und nicht nur eine Rauschabweichung sein. Deshalb wird das Minimum Min₂ verworfen, weil es diese durch den Pfeil angedeutete Schwellenbedingung nicht erfüllt.

Eine praktische Möglichkeit, die Minima zu lokalisieren, besteht darin, die Ableitung zu bilden und darin nach einem Vorzeichenwechsel zu suchen. Vorzugsweise wird dazu eine diskrete Ableitung betrachtet, also Differenzen benachbarter Werte der diskreten Tiefenschattenkontur. Genau diese Differenzen können auch für die Schwellenbedingung herangezogen werden, mit der zu wenig ausgeprägte Minima wie Min₂ verworfen werden.

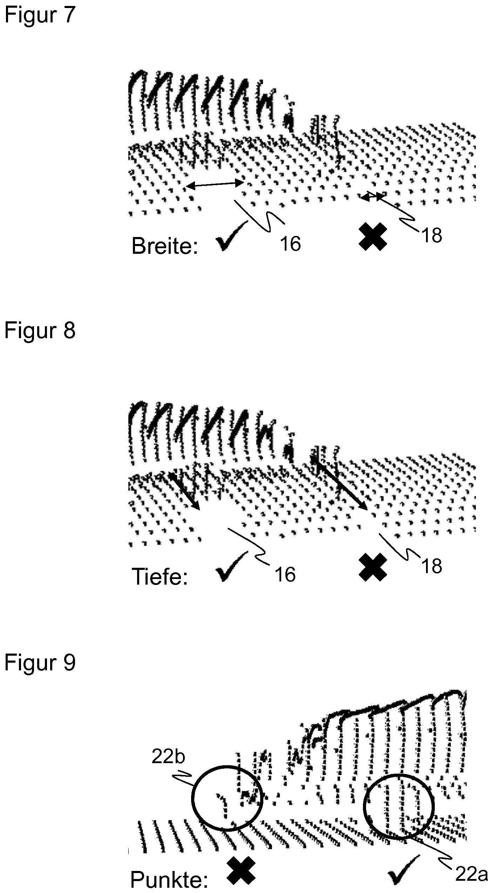

Trotz der genannten Schwellenbedingung sollten die verbleibenden Minima Min₁, Min₃ noch nicht mit Positionen von Fahrzeugachsen identifiziert werden, sondern sie gelten vorzugsweise vorerst nur als Kandidaten, die einer weiteren Verifikation unterzogen werden. Die Figuren 7 bis 9 illustrieren drei Verifikationskriterien, die schon einzeln die Erkennungsrate verbessern, bevorzugt jedoch gemeinsam erfüllt sein müssen. Kandidaten, welche die geforderten Verifikationskriterien erfüllen, werden als Fahrzeugachsen aufgefasst, und deren Anzahl und/oder Positionen stehen damit als Ergebnis zur Verfügung.

Figur 7 erläutert ein erstes Kriterium zur Überprüfung eines Kandidaten für eine Fahrzeugachse. Danach wird eine Breite des Minimums in einem vorgegebenen Breitenintervall gefordert, wobei sich das Breitenintervall insbesondere an einem üblichen Raddurchmesser orientiert. Der tatsächlich durch ein Rad verursachte Tiefenschattenbereich 16 erfüllt dieses Kriterium, der schmale nicht einem Rad zugehörige Tiefenschatten 18 dagegen nicht.

Figur 8 illustriert ein zweites Kriterium, wonach ein Kandidat in einer Position hinter einem Reifen auftauchen muss. Der Tiefenschatten sollte also nicht zu weit innen unter dem Fahrzeug beginnen, oder in den hier stets verwendeten Koordinaten darf seine X-Position nicht zu weit in die Straße hineinragen. Die Radposition ist natürlich noch unbekannt, sie ist ja das Ziel der Auswertung. Für die Zwecke des zweiten Kriteriums kann beispielsweise eine durchschnittliche X-Position der 3D-Punktwolke oberhalb der Tiefenschattenkontur in Höhe des Rades gebildet werden. Diese Messpunkte sollten, wenn der Tiefenschatten einer Fahrzeugachse entspricht, diejenigen des Rades sein. Der zu einem Rad gehörige Tiefenschattenbereich 16 erfüllt dieses Kriterium und beginnt direkt bei den Messpunkten des Rads. Bei einem auf andere Weise erzeugten Tiefenschatten 18 dagegen ist der Abstand von einer möglichen Radposition viel zu groß.

Figur 9 ist eine weitere Darstellung einer 3D-Punktwolke zur Erläuterung eines dritten Kriteriums, wonach auch genügend Messpunkte vorhanden sein müssen, die dem Rad entsprechen könnten. Dazu werden die Messpunkte oberhalb des jeweiligen Kandidaten in Höhe des Rades gezählt. Es kann dann eine absolute Mindestanzahl gefordert werden. Bevorzugt wird aber die Anzahl solcher Messpunkte für alle Kandidaten bestimmt. Dann wird die Anzahl eines zu verifizierenden Kandidaten mit dem Durchschnitt aller Kandidaten oder der übrigen Kandidaten verglichen. Verworfen werden Kandidaten, wenn sie von diesem Durchschnitt zu stark nach unten abweichen. In Figur 9 entsprechen die Messpunkte 22a tatsächlich einem Rad. Beim anderen Kandidaten links dagegen, werden deutlich zu wenige Messpunkte 22b gezählt, so dass an dieser Position keine Fahrzeugachse liegen kann.

Werden alle drei Verifikationskriterien geprüft, und wird zudem die Auswertung zweifach jeweils mit den Messpunkten eines der beiden seitlichen Profilerfassungssensoren 14a-b bei anschließender Konsolidierung die beiden Ergebnisse durchgeführt, so konnte in Testreihen eine Erkennungsrate von mehr als 98 %, für einige Achszahlen sogar fast 100 % erreicht werden.

## Patentansprüche

1. Erfassungsvorrichtung (10) zum Erkennen von Fahrzeugachsen eines Fahrzeugs auf einer Fahrbahn (12), wobei die Erfassungsvorrichtung (10) mindestens einen Profilerfassungssensor (14a-c) zum Erzeugen einer 3D-Punktwolke von Fahrzeug und Fahrbahn (12), der seitlich der Fahrbahn (12) angeordnet ist, um eine Schnittebene quer zur Fahrzeuglängsachse zu erfassen, sowie eine Auswertungseinheit zum Identifizieren von Fahrzeugachsen in der 3D-Punktwolke aufweist,
**dadurch gekennzeichnet,**
**dass** die Auswertungseinheit dafür ausgebildet ist, mit Hilfe einer Höhenschwelle einen Bodenbereich der 3D-Punktwolke zu selektieren und Tiefenschattenbereiche (16, 18) der 3D-Punktwolke auf der Fahrbahn (12) zu bestimmen, wobei Tiefenschattenbereiche (16, 18) Fehlstellen in der 3D-Punktwolke unter dem Fahrzeug sind, und durch Räder abgeschattete Tiefenschattenbereiche (16) zu lokalisieren, indem aus der 3D-Punktwolke eine Tiefenschattenkontur als die jeweils größten Tiefenwerte in Schnittebenen quer zur Fahrzeuglängsachse, gemessen von einer Seite des Fahrzeugs, bestimmt und Extrema in der Tiefenschattenkontur als Kandidaten für einen durch Räder abgeschatteten Tiefenschattenbereich (16) erkannt werden, die Kandidaten (16, 18) zu verifizieren und verifizierte Kandidaten (16) als Fahrzeugachsen zu identifizieren, wobei das Kriterium erfüllt sein muss, dass die Tiefenschattenkontur (16) nicht zu weit unter das Fahrzeug ragt, gemessen an einer durchschnittlichen Querposition der 3D-Punktwolke oberhalb der Tiefenschattenkontur in Höhe des Rades.

2. Erfassungsvorrichtung (10) nach Anspruch 1,
wobei die Auswertungseinheit dafür ausgebildet ist, Punkte (20) der 3D-Punktwolke in der Schnittebene zu ignorieren, die von der Seite des Fahrzeugs betrachtet hinter einer Lücke liegen.

3. Erfassungsvorrichtung (10) nach einem der vorhergehenden Ansprüche,
wobei die Auswertungseinheit dafür ausgebildet ist, nur solche Extrema zu berücksichtigen, bei denen der Anstieg neben dem Extremum steil genug ist.

4. Erfassungsvorrichtung (10) nach einem der vorhergehenden Ansprüche,
wobei die Auswertungseinheit dafür ausgebildet ist, zum Verifizieren dier Kandidaten (16, 18) mindestens noch eines der folgenden Kriterien erfüllt sein muss:
- die Breite des Extremums liegt in einem erwarteten Breitenintervall und/oder
- die 3D-Punktwolke weist am Rand der Tiefenschattenkontur auf einer erwarteten Radhöhe eine Mindestanzahl von Punkten (22) auf.

5. Erfassungsvorrichtung (10) nach einem der vorhergehenden Ansprüche,
wobei mindestens ein Profilerfassungssensor (14a-b) in einer Höhe von 1m bis 3m angeordnet ist.

6. Erfassungsvorrichtung (10) nach Anspruch einem der vorhergehenden Ansprüche,
wobei zwei Profilerfassungssensoren (14a-b) seitlich zu beiden Seiten der Fahrbahn (12) angeordnet sind.

7. Erfassungsvorrichtung (10) nach einem der vorhergehenden Ansprüche,
wobei die Auswertungseinheit dafür ausgebildet ist, Tiefenschattenbereiche (16) je einmal von beiden Seiten des Fahrzeugs her zu lokalisieren und die dabei jeweils identifizierten Fahrzeugachsen gegenseitig zu kombinieren oder zu plausibilisieren.

8. Erfassungsvorrichtung (10) nach einem der vorhergehenden Ansprüche,
die mindestens einen Sensor (14a-c) aufweist, um Zeit-Positions-Informationen der Fahrzeuge zu erfassen.

9. Erfassungsvorrichtung (10) nach einem der vorhergehenden Ansprüche,
wobei der mindestens eine Profilerfassungssensor (14a-c) eine 3D-Kamera oder einen Laserscanner aufweist.

10. Verfahren zum Erkennen von Fahrzeugachsen eines Fahrzeugs auf einer Fahrbahn (12), wobei mit mindestens einem Profilerfassungssensor (14a-c), der seitlich der Fahrbahn (12) angeordnet ist, um eine Schnittebene quer zur Fahrzeualänasachse zu erfassen, eine 3D-Punktwolke von Fahrzeug und Fahrbahn (12) erzeugt wird und die 3D-Punktwolke ausgewertet wird, um darin Fahrzeugachsen zu identifizieren,
**dadurch gekennzeichnet,**
**dass** mit Hilfe einer Höhenschwelle ein Bodenbereich der 3D-Punktwolke selektiert wird Tiefenschattenbereiche (16, 18) der 3D-Punktwolke auf der Fahrbahn (12) bestimmt werden, wobei Tiefenschattenbereiche (16, 18) Fehlstellen in der 3D-Punktwolke unter dem Fahrzeug sind, und durch Räder abgeschattete Tiefenschattenbereiche (16, 18) zu lokalisieren, indem aus der 3D-Punktwolke eine Tiefenschattenkontur als die jeweils größten Tiefenwerte in Schnittebenen quer zur Fahrzeuglängsachse, gemessen von einer Seite des Fahrzeugs, bestimmt und Extrema in der Tiefenschattenkontur als Kandidaten (16, 18) für einen durch Räder abgeschatteten Tiefenschattenbereich (16) erkannt werden, die Kandidaten (16, 18) verifiziert verifizierte Kandidaten (16) als Fahrzeugachsen identifiziert werden, wobei das Kriterium erfüllt sein muss, das die Tiefenschattenkontur (16) nicht zu weit unter das Fahrzeug ragt, gemessen an einer durchschnittlichen Querposition der 3D-Punktwolke oberhalb der Tiefenschattenkontur in Höhe des Rades.

## Claims

1. A detection apparatus (10) for detecting vehicle axles of a vehicle on a roadway (12), wherein the detection apparatus (10) comprises at least one profile detection sensor (14a-c) for generating a 3D point cloud of the vehicle and the roadway (12), the profile detection sensor (14a-c) being arranged on the side of the roadway (12) for detecting a sectional plane transverse to the longitudinal vehicle axis, as well as an evaluation unit for identifying vehicle axles in the 3D point cloud,
**characterized in that** the evaluation unit is configured to select a ground region of the 3D point cloud by means of a height threshold and to determine depth shadow regions (16, 18) of the 3D point cloud on the roadway (12), wherein depth shadow regions (16, 18) are gaps in the 3D point cloud under the vehicle, and to localize depth shadow regions (16) shadowed by wheels by determining a depth shadow contour as the respective largest depth values in sectional planes transverse to the longitudinal vehicle axis as measured from the side of the vehicle, detecting extrema of the depth shadow contour as candidates for depth shadow regions (16) shadowed by wheels, verifying the candidates (16, 18) and identifying verified candidates (16) with vehicle axles, wherein the criterion must be satisfied that the depth shadow contour (16) does not extend too far under the vehicle as compared to an average transverse position of the 3D point cloud above the depth shadow contour at the height of the wheel.

2. The detection apparatus (10) according to claim 1,
wherein the evaluation unit is configured to ignore points (20) of the 3D point cloud in the sectional plane which are, when viewed from the side of the vehicle, behind a gap.

3. The detection apparatus (10) according to any one of the preceding claims,
wherein the evaluation unit is configured to consider only those extrema where the slope next to the extremum is steep enough.

4. The detection apparatus (10) according to any one of the preceding claims,
wherein the evaluation unit is configured to verify candidates (16, 18) in that at least one additional criterion must be satisfied:
- the width of the extremum has to be within an expected width interval and/or
- the 3D point cloud comprises a minimum number of points (22) at the edge of the depth shadow contour at an expected wheel height.

5. The detection apparatus (10) according to any one of the preceding claims, wherein at least one profile detection sensor (14a-b) is arranged at a height of 1 m to 3 m.

6. The detection apparatus (10) according to any one of the preceding claims, wherein two profile detection sensors (14a-b) are arranged on both sides of the roadway (12).

7. The detection apparatus (10) according to any one of the preceding claims, wherein the evaluation unit is configured to localize depth shadow regions (16) twice from both sides of the vehicle and to mutually combine or verify the respective identified vehicle axles.

8. The detection apparatus (10) according to any one of the preceding claims, comprising at least one sensor (14a-c) for detecting time and position information of the vehicles.

9. The detection apparatus (10) according to any one of the preceding claims, wherein the at least one profile detection sensor (14a-c) comprises a 3D camera or a laser scanner.

10. A method for detecting vehicle axles of a vehicle on a roadway (12), wherein a 3D point cloud of the vehicle and the roadway (12) is generated by at least one profile detection sensor (14a-c) arranged on the side of the roadway (12) for detecting a sectional plane transverse to the longitudinal vehicle axis, and wherein a 3D point cloud is evaluated for identifying vehicle axles,
**characterized in that** a ground region of the 3D point cloud is selected by means of a height threshold and depth shadow regions (16, 18) of the 3D point cloud on the roadway (12) are determined, wherein depth shadow regions (16, 18) are gaps in the 3D point cloud under the vehicle, and depth shadow regions (16) shadowed by wheels are localized by determining a depth shadow contour as the respective largest depth values in sectional planes transverse to the longitudinal vehicle axis as measured from the side of the vehicle, detecting extrema of the depth shadow contour as candidates for depth shadow regions (16) shadowed by wheels, verifying the candidates (16, 18) and identifying verified candidates (16) with vehicle axles, wherein the criterion must be satisfied that the depth shadow contour (16) does not extend too far under the vehicle as compared to an average transverse position of the 3D point cloud above the depth shadow contour at the height of the wheel.

## Revendications

1. Dispositif de détection (10) pour reconnaître des essieux d'un véhicule sur une chaussée (12), dans lequel le dispositif de détection (10) comprend au moins un capteur de détection de profil (14a-c) destiné à générer un nuage de points 3D du véhicule et de la chaussée (12) et agencé latéralement à côté de la chaussée (12), afin de détecter un plan de coupe transversalement à l'axe longitudinal du véhicule, ainsi qu'une unité d'évaluation pour identifier les essieux du véhicule dans le nuage de points 3D,
**caractérisé en ce que**
l'unité d'évaluation est réalisée pour sélectionner une zone de sol du nuage de points 3D à l'aide d'un seuil en hauteur et pour déterminer des zones d'ombres en profondeur (16, 18) du nuage de points 3D sur la chaussée (12), les zones d'ombres en profondeur (16, 18) étant des lacunes dans le nuage de points 3D au-dessous du véhicule, et pour localiser des zones d'ombres en profondeur (16) ombrées par les roues, en déterminant à partir du nuage de points 3D un contour d'ombres en profondeur à titre de valeurs de profondeur maximales respectives dans des plans de coupe transversalement à l'axe longitudinal du véhicule, mesuré depuis un côté du véhicule, et en reconnaissant des extremums dans le contour d'ombres en profondeur à titre de candidats pour une zone d'ombres en profondeur (16) ombrée par les roues, pour vérifier les candidats (16, 18) et pour identifier des candidats vérifiés (16) à titre d'essieux du véhicule, étant entendu que le critère doit être rempli selon lequel le contour d'ombres en profondeur (16) ne s'étend pas trop loin au-dessous du véhicule, mesuré dans une position transversale moyenne du nuage de points 3D au-dessus du contour d'ombres en profondeur à hauteur de la roue.

2. Dispositif de détection (10) selon la revendication 1, dans lequel l'unité d'évaluation est réalisée pour ignorer des points (20) du nuage de points 3D dans le plan de coupe, qui se trouvent en arrière d'une lacune, observés depuis le côté du véhicule.

3. Dispositif de détection (10) selon l'une des revendications précédentes, dans lequel l'unité d'évaluation est réalisée pour ne prendre en compte que ces extremums dans lesquels la montée à côté de l'extremum est suffisamment raide.

4. Dispositif de détection (10) selon l'une des revendications précédentes, dans lequel l'unité d'évaluation est réalisée pour vérifier les candidats (16, 18), étant entendu que l'un des critères suivants doit également être rempli :
- la largeur de l'extremum se situe dans un intervalle de largeurs attendu, et/ou
- le nuage de points 3D présente un nombre minimum de points (22) au bord du contour d'ombres en profondeur à une hauteur de roue attendue.

5. Dispositif de détection (10) selon l'une des revendications précédentes, dans lequel au moins un capteur de détection de profil (14a-b) est agencé à une hauteur de 1 m à 3 m.

6. Dispositif de détection (10) selon l'une des revendications précédentes, dans lequel deux capteurs de détection de profil (14a-b) sont agencés latéralement de part et d'autre de la chaussée (12).

7. Dispositif de détection (10) selon l'une des revendications précédentes, dans lequel l'unité d'évaluation est réalisée pour localiser des zones d'ombres en profondeur (16) respectivement une fois de part et d'autre du véhicule et pour combiner ou plausibiliser mutuellement les essieux de véhicule respectifs identifiés.

8. Dispositif de détection (10) selon l'une des revendications précédentes, comprenant au moins un capteur (14a-c) pour détecter des informations temps/position des véhicules.

9. Dispositif de détection (10) selon l'une des revendications précédentes, dans lequel ledit au moins un capteur de détection de profil (14a-c) comprend une caméra 3D ou un scanneur laser.

10. Procédé pour reconnaître des essieux d'un véhicule sur une chaussée (12), dans lequel, au moyen d'au moins un capteur de détection de profil (14a-c) agencé latéralement à côté de la chaussée (12), afin de détecter un plan de coupe transversalement à l'axe longitudinal du véhicule, un nuage de points 3D du véhicule et de la chaussée (12) est généré et le nuage de points 3D est évalué pour identifier dans celui-ci les essieux du véhicule,
**caractérisé en ce que**
à l'aide d'un seuil en hauteur, une zone de sol du nuage de points 3D est sélectionnée, des zones d'ombres en profondeur (16, 18) du nuage de points 3D sur la chaussée (12) sont déterminées, les zones d'ombres en profondeur (16, 18) étant des lacunes dans le nuage de points 3D au-dessous du véhicule, et des zones d'ombres en profondeur (16, 18) ombrées par les roues sont localisées du fait qu'à partir du nuage de points 3D un contour d'ombres en profondeur est déterminé à titre de valeurs de profondeur maximales respectives dans des plans de coupe transversalement à l'axe longitudinal du véhicule, mesuré depuis un côté du véhicule, et des extremums dans le contour d'ombres en profondeur sont reconnus à titre de candidats (16, 18) pour une zone d'ombres en profondeur (16) ombrée par les roues, les candidats (16, 18) sont vérifiés, et les candidats vérifiés (16) sont identifiés à titre d'essieux du véhicule, étant entendu que le critère doit être rempli selon lequel le contour d'ombres en profondeur (16) ne s'étend pas trop loin au-dessous du véhicule, mesuré dans une position transversale moyenne du nuage de points 3D au-dessus du contour d'ombres en profondeur à hauteur de la roue.
